(19) Europäisches Patentamt
European Patent Office
Office européen des brevets

(11) EP 0 875 674 A1

(12) **DEMANDE DE BREVET EUROPEEN**

(43) Date de publication:
04.11.1998 Bulletin 1998/45

(51) Int Cl.⁶: **F02K 1/76**

(21) Numéro de dépôt: 98401052.0

(22) Date de dépôt: 30.04.1998

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **30.04.1997 FR 9705339**

(71) Demandeur: **Hispano-Suiza Aerostructures 75015 Paris (FR)**

(72) Inventeur: **Dhainault, Patrice 51450 Betheny (FR)**

(54) **Inverseur de poussée protégé en cas de déverrouillage accidentel**

(57) L'invention propose un inverseur de poussée protégé en cas de déverrouillage accidentel d'un obturateur (12). Un tel inverseur (1) est remarquable en ce que la chaîne constituée par la structure fixe (10), le verrou de secours (23) et l'obturateur (12) comporte un organe à déformation plastique (42) afin d'absorber sans la restituer l'énergie cinétique accumulée par l'obturateur (12).

Une telle disposition permet de réduire l'effort supplémentaire qui apparaîtrait sans cela sur la structure fixe (10), le verrou de secours (23) et l'obturateur (12).

Fig : 2

## Description

L'invention se rapporte aux inverseurs de poussée pour aéronefs, et plus particulièrement à un inverseur de poussée dont la structure est protégée des efforts supplémentaires apparaissant à partir des verrous de secours en cas de déverrouillage accidentel du verrou principal.

Les inverseurs de poussée pour aéronefs sont des appareils bien connus permettant de renvoyer vers l'avant le flux de gaz de propulsion généré par un turbomoteur propulsant l'aéronef, afin de le ralentir. Un inverseur de poussée est une structure mince annulaire entourant le turbomoteur et formant autour de lui une veine annulaire canalisant vers l'arrière le flux des gaz de propulsion. L'inverseur comporte notamment une structure fixe annulaire traversée par une pluralité d'ouvertures radiales, au moins un obturateur mobile dégageant ou fermant les ouvertures radiales, des moyens pour ouvrir ou fermer les obturateurs, ainsi que des verrous reliant chaque obturateur à la structure fixe lorsque lesdits obturateurs sont en position fermée. Lorsque les ouvertures radiales sont fermées, le flux de gaz de propulsion généré par le turbomoteur s'écoule vers l'arrière et assure la propulsion de l'aéronef. Lorsque les ouvertures radiales sont dégagées, le flux de gaz de propulsion passe par ces ouvertures et est dévié vers l'avant, afin de ralentir l'aéronef.

Une grande sécurité est requise dans le verrouillage des obturateurs de l'inverseur, car l'ouverture accidentelle d'un obturateur pendant que l'aéronef est en phase de décollage ou en vol peut avoir des conséquences catastrophiques. C'est pourquoi le verrou dit "principal" est complété par d'autres moyens de verrouillage susceptibles de maintenir l'obturateur en position fermée malgré l'ouverture ou la rupture accidentelle du verrou principal. Habituellement, mais non obligatoirement, un second verrou de secours est disposé dans les moyens permettant de refermer la porte. On dispose aussi en seconde ou en troisième position un autre verrou dit de secours dans le voisinage du verrou principal, entre l'obturateur et la structure fixe.

Ce verrou doit comporter un jeu non négligeable entre le pêne et la gâche, afin de ne pas contrarier l'enclenchement du verrou principal. Ce jeu nécessaire peut atteindre plusieurs millimètres. En cas d'ouverture ou de rupture accidentelle du verrou principal, ainsi que de tout verrou de secours devant agir avant le verrou de secours présentement considéré, la porte tend à s'ouvrir et provoque un choc entre le pêne et la gâche avec libération d'une énergie cinétique proportionnelle au jeu e. Ce choc produit sur le verrou de secours un effort supplémentaire au moins égal à deux fois l'effort statique Fo que ce même verrou de secours devrait supporter s'il agissait seul. Pour résister à cet effort supplémentaire, il est nécessaire de surdimensionner la structure de l'inverseur au niveau de la structure fixe, des obturateurs et des organes de verrouillage, ce qui augmente la masse de l'inverseur et par répercussion son coût de fabrication et d'exploitation.

Le problème à résoudre est de protéger la structure de l'inverseur de l'effort supplémentaire provoqué par le déverrouillage accidentel d'un obturateur.

Ce problème se pose de façon aiguë sur les inverseurs du type dit "à portes" ou de type "target" dans lesquels les obturateurs sont montés pivotants dans les ouvertures radiales et se déploient en position ouverte vers l'extérieur. Dans de tels inverseurs, les portes sont soumises à la pression des gaz de propulsion qui augmentent sensiblement l'énergie cinétique accumulée par la porte après la rupture du verrou principal la retenant. De plus, la porte en se soulevant tend à "écoper", c'est à dire à couper le flux d'air ambiant qui s'écoule contre la surface extérieure de l'inverseur, ce qui crée sur la porte un couple tendant à l'ouvrir encore plus et augmente en conséquence l'énergie cinétique accumulée par la porte après la rupture du verrou principal.

Le problème se pose aussi notamment sur les inverseurs de poussée du type dit "à grille" dans lesquels l'obturateur est une virole coulissant d'avant en arrière, ainsi que sur les inverseurs du type dit "à écope" dans lesquels les obturateurs sont également montés pivotants dans les ouvertures radiales et se déploient en position ouverte vers l'intérieur.

Pour résoudre ce problème, l'invention propose de disposer dans la chaîne constitué par la structure fixe, le verrou de secours et l'obturateur un organe à déformation plastique dont la fonction est d'absorber sans la restituer l'énergie cinétique accumulée par l'obturateur. Une telle absorption d'énergie permet de réduire l'effort supplémentaire imposé à la structure et apporte la protection recherchée. De plus, la déformation plastique est par définition permanente. De ce fait, la porte est immobilisée de façon rigide dans sa nouvelle position et ne risque pas de devenir le siège de vibrations, au contraire du résultat qui aurait été obtenu si on avait utilisé un organe à déformation élastique restituant en conséquence l'énergie.

Une telle solution présente l'avantage d'être simple et peu coûteuse à mettre en oeuvre. L'inverseur ainsi protégé n'a plus à être dimensionné pour résister à l'effort supplémentaire résultant d'un déverrouillage accidentel et peut donc être allégé.

L'organe à déformation plastique sera amovible. Le fait que cet organe à déformation plastique ne soit pas réutilisable n'est pas un inconvénient dans le cas présent, car il sera simplement remplacé lors de l'opération de maintenance effectuée suite au déverrouillage accidentel.

L'homme du métier dimensionnera l'organe à déformation 5 plastique par quelques essais de laboratoire. Cet organe sera suffisamment plastique pour absorber l'énergie cinétique de l'obturateur sans le faire rebondir, mais pas trop afin que l'absorption de l'énergie puisse se faire avec un déplacement réduit maintenant encore l'obturateur dans une position acceptable.

Avantageusement, l'organe à déformation plastique sera composé d'au moins une paroi cylindrique en matériau plastique mise axialement en contrainte lors du choc, ladite paroi cylindrique étant sensiblement parallèle à la trajectoire de l'obturateur au voisinage de la position fermée. Une telle structure oppose lors de sa déformation une force F de réaction sensiblement constante liée à l'énergie absorbée W et la longueur L de la déformation par la relation :

$$W = F \times L$$

On peut ainsi pour une énergie W donnée minimiser simultanément:

- la force de réaction F, ce qui améliore la solution du problème,
- la longueur de la déformation L, ce qui autorise un mécanisme compact et facile à loger dans l'épaisseur de la nacelle.

Avantageusement, l'organe à déformation plastique sera partiellement déformé axialement préalablement à son montage sur l'inverseur, afin de supprimer le domaine des faibles déformations dans lequel la paroi cylindrique oppose une force plus élevée mais s'abaissant rapidement, ce qui permet d'utiliser ledit organe à déformation plastique dans un domaine dans lequel il oppose une force plus régulière à la déformation.

Pour réaliser l'organe à déformation plastique, on utilisera de préférence une structure dite en "nid d'abeilles" qui est couramment utilisée à d'autres fins dans l'industrie aéronautique. Un "nid d'abeilles" comporte au moins une embase en tôle mince sur laquelle sont brasées des alvéoles adjacentes cylindriques à section le plus souvent hexagonale en tôle mince aussi. Cette solution présente trois avantages;

- simplicité de réalisation et faible coût, les éléments ductiles étant simplement découpés dans du "nid d'abeilles",
- régularité de la force de déformation F, les alvéoles cylindriques se soutenant mutuellement, ce qui évite leur déformation latérale qui provoquerait l'effondrement de la force de réaction F,
- possibilité de déformation importante à effort constant.

Avantageusement on montera la gâche coulissante sur un support, suivant une direction parallèle à la trajectoire de l'obturateur au niveau de ce support, ladite gâche mettant en compression l'organe à déformation plastique contre des obstacles solidaires du support sous l'effet de l'effort exercé par l'obturateur sur le verrou.

Avantageusement, la gâche sera recouverte au moins partiellement par un couvercle amovible lié au support, ce qui permet d'emprisonner l'organe à déformation plastique contre le support sans en gêner l'accès qui se fera simplement par enlèvement du couvercle.

Avantageusement, on donnera à la gâche la forme d'un T dont la jambe coulisse dans le support, l'organe à déformation plastique se composant de deux pastilles disposées chacune entre chaque aile du T et un obstacle placé en regard de chaque aile et solidaire du support, de part et d'autre de la jambe du T, cette disposition autorisant un mécanisme simple et peu volumineux. Cette disposition offre aussi l'avantage d'une grande latitude dans le positionnement du pêne du verrou par rapport à la gâche dont l'évidement recevant le pêne peut être disposé en tout point de la jambe du T.

La présente invention permet de ramener l'effort supplémentaire F au niveau de l'effort statique Fo.

L'invention sera mieux comprise et les avantages qu'elle procure apparaîtront plus clairement au vu d'un exemple détaillé de réalisation et des figures annexées :

- la figure 1 illustre un exemple d'inverseur de poussée en coupe longitudinale.

- la figure 2 illustre par une vue en coupe, la chaîne constituée par la structure fixe, le verrou et l'obturateur, l'organe à déformation plastique étant disposé entre la gâche et le support de ladite gâche. On notera que la coupe est transversale par rapport à l'inverseur,

- la figure 3 illustre par une vue de face la gâche du verrou montée sur son support, le couvercle étant enlevé,

- la figure 4 reprend les éléments de la figure 3 surmontés du couvercle.

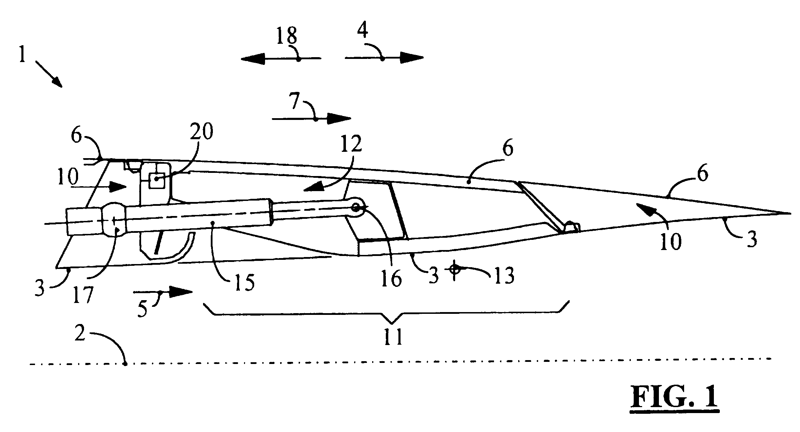

On se reportera en premier lieu à la figure 1. Un inverseur de poussée 1 est une structure sensiblement annulaire d'axe géométrique 2 entourant le turbomoteur non représenté. L'inverseur de poussée 1 comporte une paroi intérieure 3 qui canalise vers l'arrière 4 les gaz de propulsion 5 générés par le turbomoteur. L'inverseur de poussée 1 comporte aussi une paroi extérieure 6 le long de laquelle s'écoule l'air ambiant 7. L'inverseur de poussée 1 comporte aussi une structure fixe 10 traversée par une pluralité d'ouvertures sensiblement radiales 11, lesdites ouvertures 11 étant fermées par des obturateurs 12 montées avec des pivots 13 sur la structure fixe 10. Dans ce type d'inverseur, les obturateurs 12 sont également appelés "portes".

l'obturateur est habituellement actionnée à l'ouverture et à la fermeture par un vérin 15 dont une extrémité est reliée à l'obturateur 12 par une articulation 16 et dont l'autre extrémité est reliée à la structure fixe 10 par une rotule 17. Lorsque l'obturateur 12 est ouvert, le flux de gaz de propulsion 5 passe par les ouvertures radiales 11 et est dévié vers l'avant 18 par les obturateurs 12 faisant office de déflecteur, ce qui procure l'effet d'inversion de poussée recherché.

Lorsque la porte 12 est fermée, elle est maintenue dans cette position par un système de verrouillage 19 reliant l'obturateur 12 à la structure fixe 10. Le système de verrouillage 19 est habituellement mais pas nécessairement disposé à l'avant de l'obturateur 12 et il comporte un verrou principal et au moins un verrou de secours non référencés sur la figure 1.

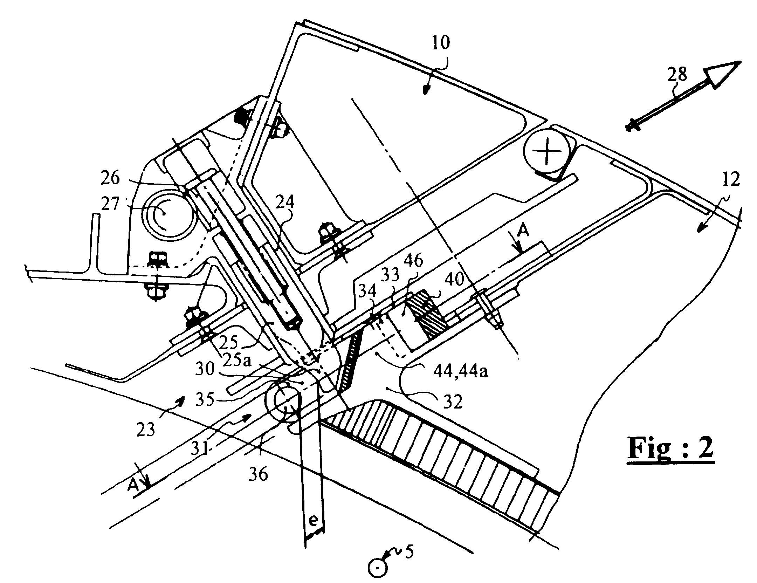

On se reportera maintenant à la figure 2. Le verrou de secours 23 comporte un fût 24 cylindrique solidaire de la structure fixe 10, ainsi qu'un pêne 25 coulissant dans le fût cylindrique 24, ledit pêne 25 se prolongeant vers l'arrière par une crémaillère 26 dans laquelle s'engrène un pignon 27 dont la rotation permet de mouvementer le pêne 25 entre les positions ouvertes et fermées. On référencera 28 la direction du déplacement de l'obturateur 12, le pêne 25 étant approximativement orthogonal à ladite direction 28 et pénétrant par son extrémité avant 25a dans un évidement 30 de la gâche 31, ladite gâche 31 étant montée coulissante sur un support 32 solidaire de l'obturateur 12, ladite gâche 31 étant partiellement recouverte par une plaque 33 faisant office de couvercle, ledit couvercle 33 étant solidaire du support 32 mais démontable grâce à des vis de fixation 34. La gâche 31 coulisse dans le support 32 suivant une direction approximativement parallèle à la direction 28 de déplacement de l'obturateur 12. La flèche 28 indique aussi le sens de l'ouverture de l'obturateur 12. L'évidement 30 est dans cet exemple constitué par une fourche 35 dont les extrémités maintiennent un barreau 36. En cas d'ouverture intempestive de l'obturateur 12, le barreau 36 arrive au contact de l'extrémité avant 25a du pêne 25, ce qui immobilise alors l'obturateur 12 dans cette position.

On notera e le jeu laissé entre le barreau 36 et le pêne 25. Lors d'une ouverture intempestive de l'obturateur 12, celui-ci se déplace vers l'extérieur d'une distance e sous l'effet de la pression du flux d'air de propulsion 5 produit par le turbomoteur et acquiert ainsi une énergie cinétique importante qui produira un effort important sur le verrou de secours 23, la structure fixe 10 et l'obturateur 12 lorsque le barreau 36 arrivera au contact du pêne 25.

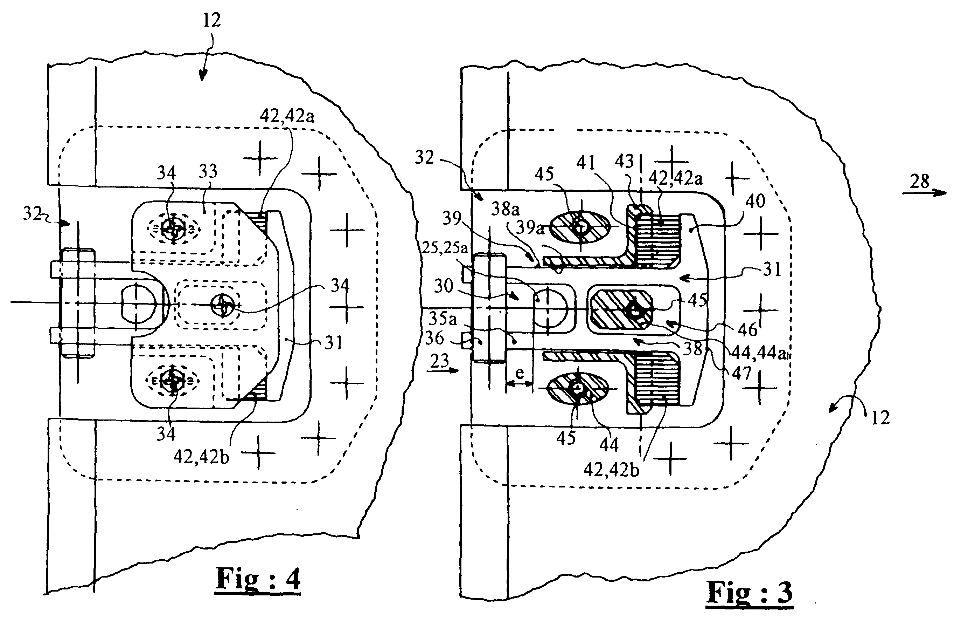

On se reportera maintenant à la figure 3. La gâche 31 a la forme générale d'un T dont la jambe 38 coulisse suivant la direction 28 par ses deux flancs 38a entre les deux parois 39a d'une glissière 39 aménagée sur le support 32. L'extrémité de la jambe 38 comporte la fourche 35 dont les deux ailes 35a maintiennent le barreau 36, ces deux ailes 35a et le barreau 36 formant l'évidement 30 de la gâche 31 dans lequel pénètre le pêne 25 par son extrémité avant 25a. La gâche 31 comporte à son autre extrémité deux ailes 40 s'étendant perpendiculairement de part et d'autre de la jambe 38 du T. En regard des ailes 40 dans le sens opposé au sens de l'ouverture 28 de l'obturateur 12 sont disposés sur le support 32 de part et d'autre de la glissière 39 deux épaulements 41, un organe à déformation plastique 42 constitué de deux pastilles 42a et 42b en nid d'abeilles, lesdites pastilles 42a, 42b étant placées chacune entre chaque couple formé par une aile 4 du T et un bossage 41. Chaque épaulement 41 est prolongé à son extrémité par un bord tombé 43 empêchant les pastilles 42a et 42b de s'écarter de la jambe 38.

Trois bossages 44 sont disposés sur le support 32 et comportent chacun un taraudage 45 permettant de visser sur lesdits bossages 44 le couvercle référencé 33 sur la figure 2. Avantageusement, l'un des bossages 44a passera à travers une ouverture 46 de la jambe 38 du T ou sera disposé au-dessus du sommet 47 du T afin de faire office de butée pour maintenir la gâche 31 juste au contact des pastilles 42a et 42b par les ailes 40 du T.

On regardera à titre indicatif la figure 4 montrant le couvercle 33 maintenu sur le support 32 par les vis de fixation 34 et recouvrant au moins partiellement la gâche 31 en T et les pastilles 42a et 42b.

On se reportera maintenant simultanément aux figures 2 et 3. Lorsque l'obturateur 12 se déplace de façon intempestive dans le sens de l'ouverture 28, le barreau 36 de la gâche 31 arrive en butée contre l'extrémité avant 25a du pêne 25, ce qui a pour effet de faire coulisser la gâche 31 sur le support 32 et d'écraser les pastilles 42a et 42b contre les épaulements 41 faisant office d'obstacles, ceci par le jeu des ailes 40 tirées par la jambe 38 de la gâche 31 en T.

On comprend aussi que le couvercle 33 permet simultanément d'emprisonner les pastilles 42a, 42b entre les ailes 40 et les épaulements 41, mais aussi de compléter le guidage de la gâche 31 contre le support 32, ce qui permet de donner à la jambe 38 une section rectangulaire guidée entre des parois 39a parallèles, le tout étant simple à usiner et facilitant la dépose de la gâche 31.

La présente invention n'est pas limitée à l'exemple de réalisation qui vient d'en être donné, mais en couvre au contraire toutes les variantes qui pourraient lui être apportées sans sortir de son cadre ni de son esprit. Ainsi, le fût 24 du verrou de secours 23 peut être monté sur l'obturateur 12 alors que la gâche 31, et son support 32 sont montés sur la sructure fixe 10. On comprend que l'organe à déformation plastique 42 peut constituer directement l'organe de liaison de la gâche 31, par exemple en remplacement du support 32, la gâche 31 n'ayant plus dans ce cas à être montée coulissante.

On comprend enfin que l'invention est applicable sur tout type d'inverseur de poussée en modifiant simplement l'orientation de l'organe à déformation plastique ainsi que des moyens le mettant en compression, afin de l'adapter à la cinématique d'ouverture de l'inverseur.

**Revendications**

1.  Inverseur de poussée protégé en cas de déverrouillage accidentel, ledit inverseur 1 comportant une structure fixe (10) et au moins un obturateur (12) verrouillé par au moins un verrou principal et au moins un verrou de secours (23), ledit verrou de secours (23) comportant un pêne (25) coopérant avec une gâche (31), ledit obturateur (12) se déplaçant suivant une direction (28), caractérisé en ce que :

a) la gâche (31) est montée coulissante sur un support (32) suivant une direction sensiblement parallèle à la trajectoire (28) de l'oburateur (12),

b) la gâche (31) comprime un organe à déformation plastique (42) contre des épaulements (41) solidaires du support (32) sous l'effet de l'effort à l'ouverture exercé par l'obturteur (12) sur le verrou de secours (23).

2.  inverseur selon la revendication 1 caractérisé en ce que l'organe à déformation plastique (42) est amovible et est emprisonné contre le support (32) par un couvercle (33) lui-même amovible.

3.  Inverseur selon la revendication 1 ou 2 caractérisé en ce que :

a) La gâche (3) a la forme générale d'un T dont la jambe (38) coulisse dans le support (32),

b) l'organe à déformation plastique (42) est composé de deux pastilles (42a, 42b) disposées chacune entre chaque aile (40) du T et les épaulements (41) solidaires du support (32) en regard des ailes (40).

4.  Inverseur selon l'une quelconque des revendications 1 à 3, caractérisé en ce que l'organe à déformation plastique (42) est du nid d'abeilles mis axialement en contrainte.

5.  Inverseur selon la revendication 4, caractérisé en ce que l'organe à déformation plastique (42) est partiellement déformé axialement, avant son montage sur l'inverseur, afin de supprimer le domaine des faibles déformations dans lequel la paroi cylindrique oppose une force de réaction plus élevée.

**FIG. 1**

EP 0 875 674 A1

**Fig : 2**

EP 0 875 674 A1

**Fig : 3**

**Fig : 4**

**Office européen des brevets**

**RAPPORT DE RECHERCHE EUROPEENNE**

Numéro de la demande

EP 98 40 1052

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 4 970 857 A (FAUPELL LAWRENCE C) 20 novembre 1990<br>* colonne 1, alinéa 6 - dernier alinéa *<br>* colonne 2, ligne 29 - ligne 42 *<br>* colonne 3, ligne 54 - ligne 58 *<br>* colonne 4, ligne 11 - ligne 39 *<br>* figures * | 1-5 | F02K1/76 |
| A | US 4 484 439 A (SINGER VICTOR ET AL) 27 novembre 1984<br>* figures 10-13 *<br>* abrégé *<br>* colonne 9, ligne 19 - ligne 23 *<br>* colonne 8, ligne 53 - colonne 9, ligne 3 * | 1-5 | |
| A | US 3 182 449 A (THIOKOL CHEMICAL CORPORATION) 11 mai 1965<br>* le document en entier *<br>en particulier<br>* colonne 2, ligne 37 - ligne 59 *<br>* colonne 3, ligne 11 - ligne 16 *<br>* figures * | 1-5 | DOMAINES TECHNIQUES RECHERCHES (Int.Cl.6)<br><br>F02K |

Le présent rapport a été établi pour toutes les revendications

| Lieu de la recherche | Date d'achèvement de la recherche | Examinateur |
|---|---|---|
| LA HAYE | 3 juillet 1998 | Raspo, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)